# EUROPEAN PATENT APPLICATION

(11) **EP 2 509 324 A1**
(43) Date of publication of application: **10.10.2012**
(21) Application number: 11305415.9
(22) Date of filing: 08.04.2011
(51) Int. Cl.: H04N 13/00

(54) **Method and apparatus for analyzing stereoscopic or multi-view images**

(71) Applicant: Thomson Licensing, 92130 Issy-les-Moulineaux (FR)
(72) Inventor: Schlosser, Markus, 30177, Hannover (DE); Jachalsky, Jörn, 30173, Hannover (DE); Hoerentrup, Jobst, 30974, Wennigsen (DE)
(74) Representative: Schmidt-Uhlig, Thomas

(57) **Abstract**

A method for analyzing the colors of stereoscopic or multi-view images is described. The method comprises the steps of:
- retrieving (2) one or more disparity maps for the stereoscopic or multi-view images;
- aligning (3) one or more of the images to a reference image by warping the one or more images according to the retrieved disparity maps; and
- performing an analysis (4, 5, 6) of discrepancies on one or more of the aligned images.

## Description

The present invention relates to a method and an apparatus for analyzing stereoscopic or multi-view images. More specifically, a method and an apparatus for analyzing the colors of stereoscopic or multi-view images.

For stereoscopic display in 3D-TV, 3D-video and 3D-cinema, a real word scene is captured by two or even more cameras. In most of the practical cases, a scene is captured from two different viewpoints using a stereo camera equipment. An exemplary object in a real word scenario is projected onto different positions within the corresponding camera images. During playback the captured stereoscopic images are displayed to a viewer. To avoid viewing discomfort, the stereoscopic images need to match spatially, i.e. there should be no vertical parallax and the horizontal parallax should be within suitable limits. However, the stereoscopic images also need to match in terms of color and luminance. For native stereo shots, this is far from trivial as lenses and image sensors vary in their characteristics. Furthermore, a potential mirror in the stereo rig carrying the cameras typically has an unequal transmission/reflection ratio. Generally, the transmission/reflection ratio depends on the wavelength, so that not only the brightness but also the color is affected.

Today, such color and luminance discrepancies are often corrected manually by providing the operator of the camera rig or the post-production tool with an overlay view of both images, e.g. swipe, side-by-side or checkerboard. Automatic corrections so far are based on global color information per image. The most common approach is to adjust the histograms in each color channel separately. As a more sophisticated alternative it has been proposed to automatically adjust the center of gravity, the angle of the principal axis as well as the size of the luminance and color point clouds.

A possible approach for color correction is described in F. Shao et al.: "A robust color correction method for stereoscopic video coding", 3rd International Congress on Image and Signal Processing (CISP), 2010, pp.1106-1109. According to this approach first a disparity estimation between the two images of a stereoscopic image pair is performed. Then spatial and also temporal color correction matrices are estimated for the right image. The obtained correction matrices are restricted to linear and global color transformations.

A further approach is described by Q. Wang et al.: "A Robust Algorithm for Color Correction between two Stereo Images", 9th Asian Conference on Computer Vision (ACCV), 2009, pp. 405-416. By combining color segmentation and feature point matching, compensation of color discrepancies is performed region by region instead of the whole image.

It is an object of the present invention to propose a further approach for analyzing stereoscopic or multi-view images, which allows to achieve improved correction results.

According to the invention, this object is achieved by a method for analyzing stereoscopic or multi-view images, which comprises the steps of:
- retrieving one or more disparity maps for the stereoscopic or multi-view images;
- aligning one or more of the images to a reference image by warping the one or more images according to the retrieved disparity maps; and
- performing an analysis of discrepancies on one or more of the aligned images.

Accordingly, an apparatus for analyzing stereoscopic or multi-view images is adapted to perform the above method. For this purpose the apparatus has a processor for generating one or more disparity maps for the stereoscopic or multi-view images or an input via which one or more available disparity maps for the stereoscopic or multi-view images are retrieved. In addition, the apparatus has a processor for aligning one or more of the images to a reference image by warping the one or more images according to the retrieved disparity maps. Of course, the processor may be the same processor as the one used for generating the disparity maps, if such a processor is present. Finally, the apparatus has an image analyzer for performing an analysis of discrepancies on one or more of the aligned images. Again, instead of providing a dedicated image analyzer it is likewise possible to use the processor for this purpose.

The invention proposes to align the different views by warping the pixels according to their disparities. For this purpose dense disparity maps are preferably provided. The alignment of the different views allows for comparing the colors directly for each pixel instead of only indirectly for the whole image. Furthermore, only pixels that are visible in both images are considered. This has the advantage that occluded regions do not contaminate the results.

According to one aspect of the invention, an analysis is performed on global color discrepancies. Linking corresponding pixels via the disparity map allows to analyze the joint color distribution instead of only the marginal distributions, such as the histograms or point clouds per image. Consequently, the difference in overall statistics is replaced by overall statistics of pixel-wise differences and even their spatial distribution. For this purpose, an overall statistic of an absolute or relative difference in color per pixel is advantageously determined.

Preferably, for performing the analysis of global color discrepancies a mathematical function is fitted to the difference image. This allows to correct color wedges in one or more of the aligned views.

According to a further aspect of the invention, an analysis is performed on local color discrepancies. Such local color discrepancies result, for example, from specular reflections or from contaminations of an image acquisition system. Such local color discrepancies should be avoided as much as possible. Preferably, the local brightness of one or more of the aligned images is analyzed in order to perform an analysis and correction of local color discrepancies. Specular reflections are of similar hue but brighter than their surroundings, whereas contaminations are darker due to the additional absorption, out of focus, and stationary within the camera view. By comparing corresponding regions in the aligned image and the reference image, and/or by comparing image areas of an image with their surroundings, specular reflections and contamination are detected.

According to still a further aspect of the invention, an analysis is performed on depth of field discrepancies. Advantageously, for this purpose the spectrum in the surrounding of a pixel is analyzed to determine the sharpness of the pixel. Especially the high frequency components of the spectrum indicate the strength of the gradients present in the region. The spectrum analysis is greatly facilitated by the pixel-to-pixel correspondence achieved by aligning the different views. In addition, the disparity map is favorably used to check the consistency of the estimated depth of field. One depth range should be in focus, whereas closer and farther objects are increasingly more blurred.

Advantageously, subsequent to the analysis of the one or more images the determined discrepancies are corrected. For example, global color discrepancies are preferably corrected by first determining the overall statistics of the absolute or relative difference in color per pixel and subsequently minimizing the error reflected in the overall statistics. Local color discrepancies are corrected by brightening or darkening the affected pixels or by mixing the color of the affected pixels with the color of the surrounding pixels or the color of the corresponding pixels in one of the other views. Depth of field discrepancies are either corrected using known sharpening techniques on the too blurry views or by slightly blurring the other views.

According to yet another aspect of the invention, one or more of the corrected images are used as a basis for generating one or more improved disparity maps for the stereoscopic or multi-view images. Advantageously, the improved disparity maps are subsequently used for performing a further step of aligning one or more of the images to a reference image by warping the one or more images according to the improved disparity maps. As the color discrepancies between the different views may also adversely affect the stereo matching and thus the disparity estimation itself, it is advantageous to refine the disparity maps in an iterative process.

Preferably, an initial disparity map is generated using luminance images. In this way an increased robustness against large initial color discrepancies is achieved. Advantageously, a zero-normalized cross correlation is used as a similarity measure for the stereo matching, as it is especially robust against deviations in the mean luminance value.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: illustrates a procedure according to the invention for analyzing stereoscopic or multi-view images;
- Fig. 2: illustrates an iterative procedure for the disparity estimation; and
- Fig. 3: schematically depicts an apparatus adapted to perform the procedure of Fig. 1.

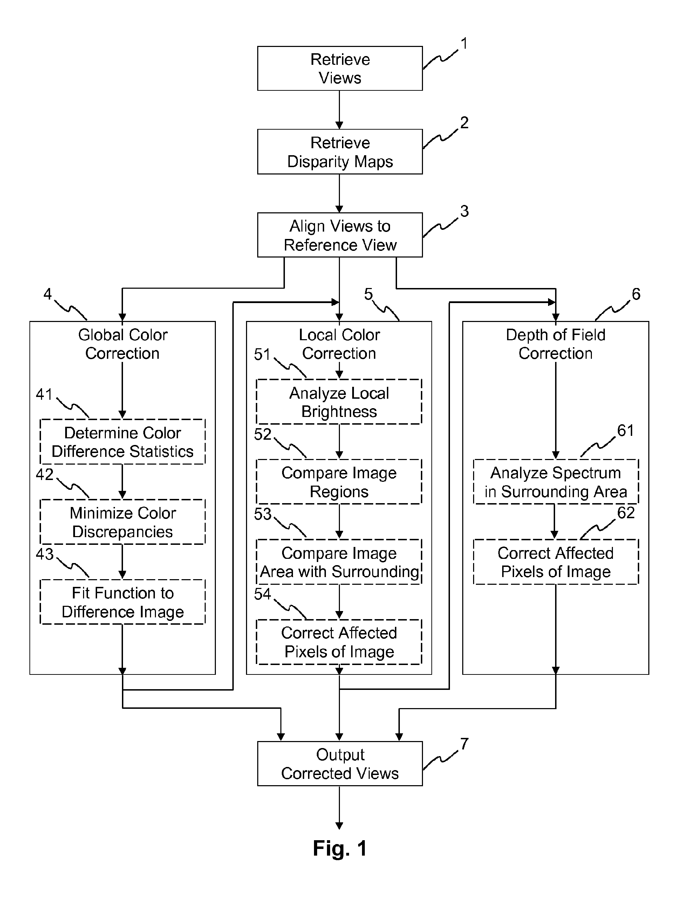

Fig. 1 illustrates a procedure according to the invention for analyzing stereoscopic or multi-view images. In a first step 1 all available views are retrieved. Then the associated disparity maps are retrieved 2, e.g. by determining the disparity maps on the fly or by retrieving disparity maps that have been determined beforehand. Then the available views are aligned 3 to a reference view by warping them according to their disparity maps. In this way a pixel-to-pixel correspondence between the images is established. This allows for comparing the colors directly for each pixel instead of only indirectly for the whole image. Furthermore, only pixels that are visible in both images are considered so that occluded regions may not contaminate the results.

The aligned views are subsequently used to perform one or more analysis and correction procedures. A first procedure 4 addresses global color discrepancies. The color discrepancies are analyzed globally by determining 41 the overall statistics of the absolute or relative difference in color per pixel. A global correction is then obtained by minimizing 42 these color discrepancies, i.e. by minimizing the error reflected in the overall statistics. Moreover, a potential spatial dependency of the error, such as color wedges, is preferably corrected subsequently by fitting 43 a plane or another mathematical function to the resulting difference image, i.e. the image representing the remaining difference between the corrected aligned image and the reference image. Of course, it is likewise possible to first apply the mathematical function and to subsequently minimize the remaining color discrepancies.

In case only global color discrepancies between the views are of interest, potentially false estimates in the disparity estimation may be removed generously before the alignment of the views. A simple left-right consistency check is generally sufficient. However, it is likewise possible to employ more elaborate confidence evaluation methods.

A second procedure 5 addresses contamination and specular reflections. In addition to the global color discrepancies, the color of the various views may also differ locally. Two major causes are specular reflections due to non-Lambertian surfaces as well as contamination of one or more of the camera lenses, e.g. due to rain drops, dust etc. While contaminations represent a direct mismatch between the views, specular reflections are mainly likely to cause ghosting effects in the presentation system. In any case, both issues should be avoided.

However, the detection of both effects is rather challenging. Per definition, the corresponding image regions look different in the two or more views. Therefore, point correspondences between the views are difficult to establish. Preferably, erroneous disparity estimates are detected and corrected during a post-processing or refinement stage. For example, a simple left-right consistency check in combination with occlusion detection is used for detecting erroneous but visible disparity estimates. This approach is described, for example, in G. Egnal: "Detecting Binocular Half-Occlusions: Empirical Comparisons of Five Approaches", IEEE Trans. Pat. Anal. Mach. Intell., Vol. 24 (2009), pp. 1127-1133. Advantageously, however, a multi-lateral filter guided by a sophisticated confidence evaluation is employed. This approach is described, for example, in J. Jachalsky et al.: "Confidence evaluation for robust, fast-converging disparity map refinement", IEEE International Conference on Multimedia and Expo (ICME), 2010, pp.1399-1404.

The resulting difference image is preferably checked by a human operator, who could at the same time detect other problems like synchronization issues etc. Alternatively, specular reflections and contamination are distinguished automatically by analyzing 51 the local brightness of the aligned views. Specular reflections are of similar hue but brighter than their surroundings, whereas contaminations are darker due to the additional absorption, out of focus, and stationary within the camera view. Hence, by comparing 52 corresponding regions in the aligned image and the reference image, and/or by comparing 53 image areas of an image with their surroundings, specular reflections and contamination are detected. The affected pixels are then corrected 54, e.g. by brightening or darkening the affected pixels or by mixing the color of the affected pixels with the color of the surrounding pixels or the color of the corresponding pixels in one of the other views.

A third procedure 6 addresses depth of field discrepancies. A common issue with stereo or multi-view recordings acquired with mirror rigs is a discrepancy in the depth of field between the different views. The unequal transmission/reflection ratio of the mirrors results in a different brightness of the views. This is often compensated for by adjusting the aperture instead of the gain during acquisition. An increased aperture, however, not only results in more light to pass through but also in a reduced depth of field.

The focus and thus the sharpness of a pixel and its disparity-compensated counterpart are preferably compared by analyzing 61 the spectrum in their surroundings. Especially the high frequency components of the spectrum indicate the strength of the gradients present in the region. The spectrum analysis is greatly facilitated by the pixel-to-pixel correspondence achieved by aligning the different views. High frequency components may not only be absent due to focus blur, but also simply due to a lack of texture in that particular image patch. Therefore, it will sometimes be difficult to make an absolute assertion concerning the focus of an image patch. However, a relative judgment in comparison to the same image patch in another view will still be possible. The affected pixels are then corrected 61, e.g. by applying known sharpening techniques on the too blurry views or by slightly blurring the other views.

Due to the more global nature of the problem, potentially false estimates in the disparity estimation may again be removed generously before the alignment of the views. Furthermore, the disparity map may be used to check the consistency of the estimated depth of field. One depth range should be in focus, whereas closer and farther objects are increasingly more blurred.

After finishing an analysis and correction procedure 4, 5, 6, the corrected views are either output 7 or handed over to the next analysis and correction procedure 4, 5, 6.

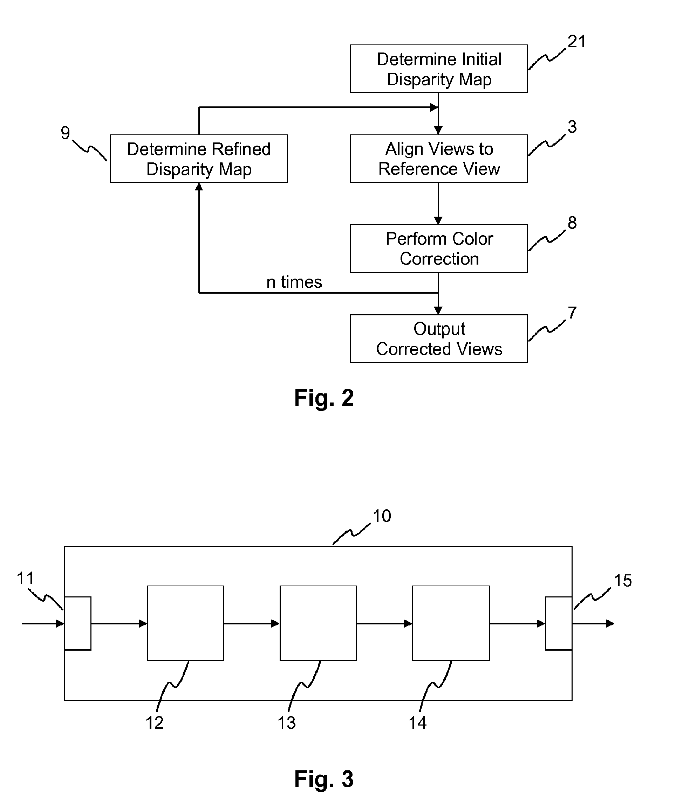

Color discrepancies between the different views may also adversely affect the stereo matching and thus the disparity estimation itself. Therefore, an iterative procedure as depicted in Fig. 2 is advantageous, where the color corrected views serve as input to a new disparity estimation run 9, which in turn is used to refine the estimation 8 of the color discrepancies, and so forth. To be robust against large initial color discrepancies, the first disparity estimation 21 may likewise be performed on luminance images. In this case, the stereo matching should especially be robust against deviations in the mean luminance value, e.g. by using a zero-normalized cross correlation as similarity measure. The one or more subsequent disparity estimation runs 8 are then applied to at least already partially color-corrected images.

Fig. 3 schematically depicts an apparatus 10 according to the invention, which is adapted to perform the procedure illustrated in Fig. 1. The apparatus 10 has an input 11 for retrieving the available views. A disparity map generator 12 generates the disparity maps associated to the different views. Alternatively, the disparity map generator 12 retrieves the associated disparity maps via the input 11, in case the associated disparity maps have already been generated beforehand. A alignment block 13 aligns the different views to a reference view by warping them according to the associated disparity maps. An analysis and color correction block 14 performs one or more of the different analysis and correction procedures 4, 5, 6 to generate corrected views. These corrected views are then forwarded to an output 15. Of course, the disparity map generator 12, the alignment block 13, and the analysis and color correction block 14 may likewise be integrated in a single processor.

## Claims

1. A method for analyzing stereoscopic or multi-view images, the method **comprising** the steps of:
- retrieving (2) one or more disparity maps for the stereoscopic or multi-view images;
- aligning (3) one or more of the images to a reference image by warping the one or more images according to the retrieved disparity maps; and
- performing an analysis (4, 5, 6) of discrepancies on one or more of the aligned images.

2. The method according to claim 1, **wherein** the discrepancies are global color discrepancies.

3. The method according to claim 2, **wherein** for performing the analysis (4) of global color discrepancies an overall statistic of an absolute or relative difference in color per pixel is determined (41).

4. The method according to claim 2, **wherein** for performing the analysis (4) of global color discrepancies a mathematical function is fitted (43) to the difference image.

5. The method according to claim 1, **wherein** the discrepancies are local color discrepancies.

6. The method according to claim 5, **wherein** the local color discrepancies result from specular reflections.

7. The method according to claim 5, **wherein** the local color discrepancies result from contaminations of an image acquisition system.

8. The method according to one of claims 5 to 7, **wherein** the step of performing an analysis (5) of local color discrepancies comprises analyzing (51) the local brightness of one or more of the aligned images.

9. The method according to claim 1, **wherein** the discrepancies are depth of field discrepancies.

10. The method according to claim 9, **wherein** the step of performing the analysis (6) of depth of field discrepancies comprises analyzing (61) the spectrum in the surrounding of a pixel to determine the sharpness of the pixel.

11. The method according to one of claims 1 to 10, **further** comprising the step of correcting the discrepancies in one or more views.

12. The method according to claim 11, **wherein** one or more of the corrected views are used as a basis for generating one or more improved disparity maps for the stereoscopic or multi-view images.

13. The method according to claim 12, **wherein** a further step of aligning (3) one or more of the images to a reference image is performed by warping the one or more images according to the generated improved disparity maps.

14. The method according to claim 12 or 13, **wherein** an initial disparity map is generated (21) using luminance images.

15. An apparatus for analyzing stereoscopic or multi-view images, **characterized in that** the apparatus is adapted to perform a method according to one of claims 1 to 14.
